# DEMANDE DE BREVET EUROPEEN

(11) **EP 2 543 839 A1**
(43) Date de publication de la demande: **09.01.2013**
(21) Numéro de dépôt: 11172508.1
(22) Date de dépôt: 04.07.2011
(51) Int. Cl.: F01N 11/00, G01N 21/01, G01N 21/17, G01N 21/43

(54) **Dispositif de mesure de la concentration d'urée**

(71) Demandeur: Inergy Automotive Systems Research (Société Anonyme), 1120 Bruxelles (BE)
(72) Inventeur: Georis, Philippe Lucien Valmy, 60350 Chelles (FR)
(74) Mandataire: de la Bigne, Guillaume Michel Marie

(57) **Abrégé**

L'invention concerne un dispositif contrôle (18) d'une solution d'urée (14) dans un réservoir (12) d'un véhicule automobile (10). Ce dispositif comprend une source lumineuse (24) apte à émettre un faisceau lumineux, un photodétecteur (26) configuré pour détecter une partie d'un faisceau lumineux émis par la source lumineuse (24) et une pièce (22) en un matériau permettant la propagation d'un faisceau lumineux émis par la source lumineuse (24). La pièce (22) a en outre une face (28) destinée à être en contact avec la solution d'urée (14). La source lumineuse (24), le photodétecteur (26) et la pièce (22) sont agencés de manière qu'un faisceau lumineux émis par la source lumineuse (24) soit propagé par la face (28) de la pièce (22), par réflexion ou par réfraction, vers le photodétecteur (26).

L'invention a également pour objet un réservoir comprenant un tel dispositif de contrôle ainsi qu'un procédé de contrôle de la solution d'urée.

## Description

La présente invention concerne le contrôle d'un liquide, en particulier un liquide contenu dans un réservoir d'un système SCR (Selective Catalytic Reduction) dans un véhicule automobile, le liquide étant une solution aqueuse d'urée.

Les législations sur les émissions des véhicules et poids lourds prévoient, entre autres, une diminution des rejets d'oxydes d'azote NOx dans l'atmosphère. Pour atteindre cet objectif, on connaît le procédé SCR qui permet la réduction des oxydes d'azote par injection d'un agent réducteur, généralement l'ammoniac, dans la ligne d'échappement. Cet ammoniac peut provenir de la décomposition par thermolyse d'une solution d'un précurseur d'ammoniac dont la concentration peut être celle de l'eutectique. Un tel précurseur d'ammoniac est généralement une solution d'urée (eutectique à 32,5% en poids d'urée).

Avec le procédé SCR, les dégagements élevés de NOx produits dans le moteur lors d'une combustion à rendement optimisé sont traités en sortie de moteur dans un catalyseur. Ce traitement requiert l'utilisation de l'agent de réduction à un niveau de concentration précis et dans une qualité extrême. La solution est ainsi précisément dosée et injectée dans le flux de gaz d'échappement où elle est hydrolysée avant de convertir l'oxyde d'azote (NOx) en azote (N2) et en eau (H2O).

Pour ce faire, il est nécessaire d'équiper les véhicules d'un réservoir contenant une solution d'additif (solution aqueuse d'urée généralement).

Or, il est important de pouvoir contrôler la qualité de l'agent de réduction dans le réservoir pour pouvoir le doser de façon précise.

L'invention a notamment pour but de fournir un dispositif simple et efficace permettant de contrôler la qualité d'une solution aqueuse d'urée dans un réservoir de stockage.

A cet effet, l'invention a pour objet un dispositif de contrôle d'une solution d'urée dans un réservoir d'un véhicule automobile, caractérisé en ce qu'il comprend une source lumineuse apte à émettre un faisceau lumineux, un photodétecteur apte à détecter une partie d'un faisceau lumineux émis par la source lumineuse et une pièce en un matériau permettant la propagation d'un faisceau lumineux émis par la source lumineuse, la pièce ayant une face destinée à être en contact avec la solution d'urée, la source lumineuse, le photodétecteur et la pièce étant agencés de manière qu'un faisceau lumineux émis par la source lumineuse soit propagé par la face de la pièce, par réflexion ou par réfraction, vers le photodétecteur.

Grâce au dispositif, on peut contrôler simplement et très rapidement la présence et la qualité de la solution d'urée dans le réservoir. En effet, lorsque la source lumineuse émet un faisceau lumineux dans la pièce, le faisceau est d'abord propagé jusqu'à la face de la pièce en contact avec la solution d'urée définissant une interface entre la pièce et la solution. A cette interface, le faisceau est en partie réfléchi dans la pièce et en partie réfracté dans la solution d'urée. L'intensité du faisceau réfléchi et l'angle du faisceau réfracté dépendent de l'indice de réfraction de la pièce, de la présence ou non de solution d'urée dans le réservoir et, en cas de présence de la solution d'urée, de la solution d'urée elle-même (notamment de sa concentration, qui conditionne en fait l'indice de réfraction de la solution). Comme le matériau de la pièce est inchangé, l'intensité du faisceau réfléchi et l'angle du faisceau réfracté dépendent essentiellement de la présence de la solution d'urée et, dans ce cas, de la concentration d'urée dans la solution. Ainsi, abstraction faite du cas où le réservoir est vide, le photodétecteur détecte une partie du faisceau lumineux propagé dont soit l'intensité (cas du faisceau réfléchi) ou l'angle (cas du faisceau réfracté) varie en fonction de la concentration en urée de la solution.

Ce dispositif est simple, compact, peu coûteux et fiable car il ne comprend pas de parties mobiles. Il permet de contrôler si le réservoir est vide et, s'il contient une solution d'urée, si la concentration d'urée dans la solution est conforme à ce qu'elle doit être.

Le dispositif de contrôle peut en outre comporter l'une ou plusieurs des caractéristiques suivantes, prises seules ou en combinaison.

Le dispositif peut comprendre des moyens de mesure de température. On peut ainsi tenir compte de l'évolution de l'indice de réfraction de la pièce et de la solution d'urée avec la température.

La source lumineuse peut être une diode électroluminescente (DEL). La DEL est robuste, économique et consomme peu d'énergie. On peut choisir une DEL émettant de la lumière dans une plage étroite de longueurs d'ondes afin de réduire les phénomènes de décomposition de la lumière à l'interface entre la pièce et la solution d'urée et obtenir un signal plus précis.

Le photodétecteur peut être une photodiode. Ce type de photodétecteur est simple et transforme la lumière qu'il absorbe en signal électrique. Ce signal peut être facilement exploité.

La pièce peut être réalisée dans un matériau minéral, par exemple du verre ou du quartz. Ces matériaux présentent une bonne résistance chimique vis-à-vis de la solution d'urée et permettent une bonne propagation du faisceau lumineux émis.

Le dispositif peut comprendre un miroir semi-transparent, de préférence intégré dans la pièce et apte à séparer un faisceau lumineux émis par la source lumineuse en deux faisceaux de trajectoires différentes, à savoir un premier faisceau lumineux, non dévié par le miroir et qui est propagé par la face de la pièce vers le photodétecteur et un deuxième faisceau lumineux témoin, réfléchi par le miroir et propagé vers un deuxième photodétecteur témoin. Grâce à ce faisceau lumineux témoin détecté par un photodétecteur témoin, on tient compte des évolutions des conditions de mesure qui sont indépendantes de la concentration d'urée mais susceptibles d'influencer la détection par le photodétecteur, notamment de la température de la solution d'urée et du vieillissement de la source lumineuse.

La source lumineuse et le photodétecteur sont de préférence intégrés dans la pièce. En effet, lorsque ces éléments sont en dehors de la pièce, il faut gérer des réflexions multiples. En plus, cette variante présente des avantages au niveau compacité et ajustement. Lorsque possible en fonction de la nature des matériaux, cette intégration peut se faire par surmoulage. Cette intégration permet de réduire les tolérances, simplifier la fabrication etc. Une autre configuration serait d'avoir le photodétecteur plongé directement dans la solution mais alors il faudrait un dispositif de positionnement spécifique.

La pièce peut être coudée ou être en deux parties ce qui permet (moyennant une disposition adéquate de la source lumineuse et du photodétecteur) de réaliser une double réfraction et ce faisant, d'augmenter (multiplier par deux) la précision de la mesure.

L'invention a également pour objet un réservoir de stockage d'une solution d'urée dans un véhicule automobile, caractérisé en ce qu'il comprend un dispositif tel que défini précédemment.

Avantageusement, le dispositif est porté par la paroi inférieure du réservoir. On entend par paroi inférieure du réservoir, la paroi qui, lorsque le réservoir est monté sur le véhicule, est la paroi la plus proche du sol. Ce positionnement du dispositif permet de s'assurer que le dispositif est le plus souvent en contact avec la solution d'urée.

Par «porté», on entend que soit le dispositif repose sur cette paroi, soit que la pièce du dispositif plonge (passe) à travers cette paroi, ce qui évite de devoir faire passer les connexions électriques à travers ladite paroi.

L'invention a aussi pour objet un procédé de contrôle d'une solution d'urée dans un réservoir d'un véhicule automobile, caractérisé en ce qu'il comprend les étapes suivantes:
- émission d'un faisceau lumineux dans une pièce en un matériau permettant la propagation dudit faisceau et ayant une face destinée à être en contact avec la solution d'urée et par laquelle ledit faisceau est propagé par réflexion et par réfraction,
- mesure d'une grandeur physique caractérisante d'un faisceau lumineux propagé (réfléchi ou réfracté) par la face de la pièce et comparaison de la grandeur avec une valeur de référence.

On notera que la grandeur physique caractérisante du faisceau lumineux propagé peut être comparée à plusieurs valeurs de référence, voire à une plage de valeurs de référence.

Généralement, celle grandeur physique est soit l'intensité du faisceau propagé si celui-ci est réfléchi, soit l'angle du faisceau propagé si celui-ci est réfracté.

Le procédé peut comprendre une étape supplémentaire consistant en une mesure de la température de la solution d'urée. Dans ce cas, la comparaison tient compte de la température mesurée.

Le procédé peut aussi comprendre deux étapes supplémentaires consistant en:
- une séparation du faisceau lumineux émis en deux faisceaux de trajectoires différentes, à savoir un premier faisceau lumineux propagé par la face de la pièce et un deuxième faisceau lumineux témoin réfléchi par un miroir, et
- une mesure d'une grandeur caractérisante du faisceau lumineux témoin.

Dans ce cas, la comparaison tient compte de la grandeur caractérisante du faisceau lumineux témoin. De préférence, le miroir utilisé est un miroir semi-transparent tel que décrit ci-dessus.

Le procédé peut également comprendre une étape de détection de l'immobilité du véhicule et une étape de détection de remplissage du réservoir, le faisceau lumineux étant émis par la source lumineuse quand les deux conditions sont vérifiées. Ainsi, le contrôle est par exemple réalisé de façon ponctuelle, lorsque que le conducteur du véhicule met le contact après avoir rempli le réservoir d'urée.

Enfin, dans une variante préférée, la pièce est coudée et la source lumineuse et le photodétecteur sont intégrés à cette pièce et disposés de sorte à réaliser une double réfraction, comme expliqué précédemment.

L'invention sera mieux comprise à la lecture de la description qui va suivre, donnée uniquement à titre d'exemple et faite en se référant aux dessins dans lesquels :
- la figure 1 est une représentation schématique d'un véhicule automobile comprenant un dispositif de contrôle de la solution d'urée dans un réservoir, selon un premier mode de réalisation de l'invention,
- la figure 2 est une vue partielle en coupe d'un réservoir et d'un dispositif de contrôle, selon un deuxième mode de réalisation de l'invention, et
- la figure 3 est une vue similaire à la vue de la figure 2, selon un troisième mode de réalisation de l'invention.

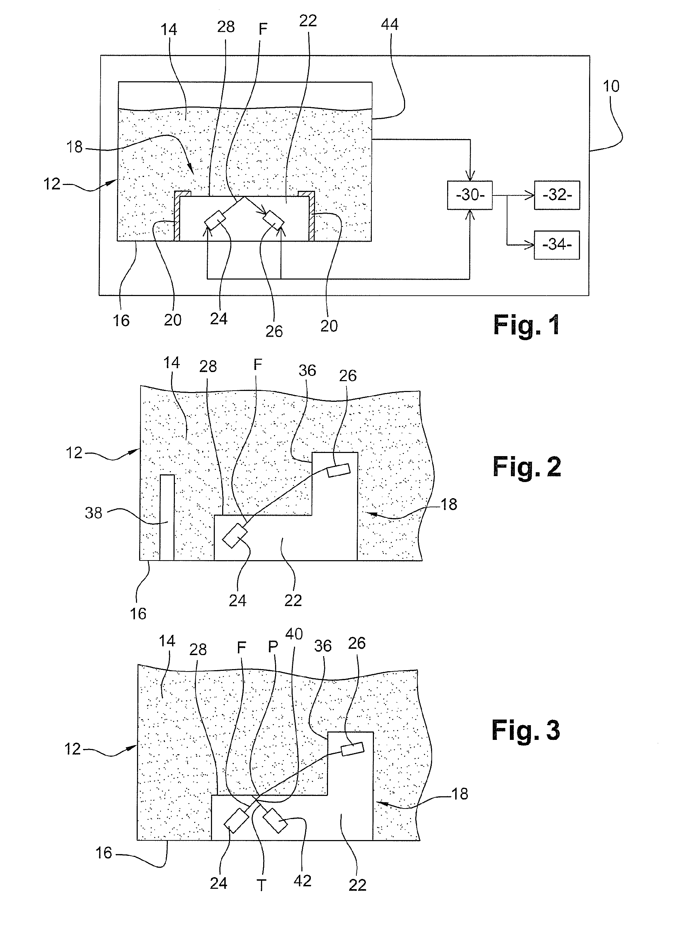

La figure 1 représente un véhicule automobile 10 comprenant un réservoir 12 contenant une solution aqueuse d'urée 14. La solution aqueuse d'urée 14 a une concentration en urée d'environ 32,5% en poids (composition eutectique).

Le réservoir 12 est généralement de forme sensiblement parallélépipédique et comprend une paroi inférieure 16 qui porte un dispositif de contrôle 18 immergé dans la solution d'urée 14. Le dispositif 18 peut être fixé par des moyens d'encliquetage 20 sur la paroi inférieure 16. Il peut également y être soudé, collé ou fixé à l'aide d'autres moyens de fixation.

Le dispositif de contrôle 18 comprend une pièce 22 réalisée en un matériau permettant la propagation de la lumière. La pièce 22 peut, par exemple, être réalisée en matériau minéral, tel que du verre ou du quartz, qui sont des matériaux qui ne sont pas attaqués par la solution d'urée 14 et qui permettent une bonne propagation de la lumière. La pièce 22 comprend une source lumineuse 24 et un photodétecteur 26. Au moins une face 28 de la pièce 22 est en contact avec la solution d'urée 14 et matérialise une interface entre la pièce 22 et la solution d'urée 14. La source lumineuse 24 peut être une DEL et le photodétecteur 26, une photodiode.

Dans ce mode de réalisation, la source lumineuse 24 est disposée dans la pièce 18 de manière à émettre un faisceau lumineux F vers la face 28 de la pièce 22. Le photodétecteur 26 est disposé dans la pièce 22 de sorte qu'il puisse détecter la partie réfléchie du faisceau lorsque le faisceau émis par la source lumineuse rencontre la face 28.

Sur la figure 1, on a également représenté un micro-calculateur 30, un témoin d'erreur 32 et un moteur 34 du véhicule automobile 10.

On notera que la représentation des différents constituants sur les figures n'est pas proportionnelle. En effet, le volume du réservoir 12 est généralement comprise entre 3 et 30 litres alors que le volume du dispositif 18 est inférieur à 20 cm3, voire inférieur à 10 cm3.

Compte tenu de ces proportions, on comprend que la face 28, bien que se trouvant en partie supérieure de la pièce 22, se situe au fond du réservoir 12, c'est-à-dire à proximité de sa paroi inférieure se trouvant la plus proche du sol lorsque le réservoir est monté sur le véhicule 10.

Le procédé de contrôle de la solution d'urée 14 contenue dans le réservoir 10 de ce mode de réalisation va être décrit.

Lorsque l'on souhaite contrôler la qualité de la solution d'urée 14, c'est-à-dire s'assurer que la concentration en urée de la solution est bien celle de l'eutectique, la source lumineuse 24 émet un faisceau lumineux F vers la face 28 de la pièce 22. Le faisceau se propage dans le matériau de la pièce 22. Lorsqu'il atteint la face 28 de la pièce 22 en contact avec la solution d'urée 14, une partie du faisceau est réfractée dans la solution 14 et une partie est réfléchie dans la pièce 18. La partie réfléchie du faisceau se propage dans le matériau de la pièce 22 et est détectée par le photodétecteur 26. Dans la suite, on désignera «faisceau réfléchi» la partie du faisceau réfléchie par la face 28 de la pièce.

Selon la concentration de la solution d'urée, l'intensité du faisceau réfléchi détecté par le photodétecteur 26 varie. Dans le mode de réalisation décrit, on utilise cette grandeur, à savoir l'intensité du faisceau réfléchi, pour caractériser le faisceau lumineux détecté par le photodétecteur 26.

L'intensité du faisceau réfléchi est transformée par le photodétecteur 26 en signal électrique qui est envoyé au micro-calculateur 30. Le micro-calculateur 30 compare la grandeur reçue du photodétecteur 26 à une valeur de référence ou à un ensemble de valeurs de référence définissant une plage de valeurs de référence considérées comme acceptables pour le bon fonctionnement du système SCR.

Si la grandeur reçue du photodétecteur 26 n'est pas comprise dans la plage de valeurs de référence, le micro-calculateur 30 envoie un signal d'erreur au témoin d'erreur 32. Le témoin d'erreur 32 peut être un voyant lumineux ou avertisseur sonore qui avertit le conducteur du véhicule que le réservoir d'urée 10 est vide ou que la concentration en urée de la solution aqueuse d'urée n'est pas conforme.

En outre, le micro-calculateur 30 peut être également relié au moteur 34 du véhicule automobile et, en cas de détection d'anomalie, envoyer un signal qui empêche de démarrer le véhicule 10. Le signal envoyé par le micro-calculateur 30 peut également brider le moteur 34 et limiter la vitesse du véhicule, par exemple à 50 km/h, permettant ainsi de déplacer le véhicule jusqu'à un lieu de dépannage, même si le système SCR ne fonctionne pas correctement.

De manière avantageuse, le contrôle de la qualité de la solution d'urée 14 contenue dans le réservoir 12 est réalisé lorsque le véhicule 10 est immobile et que le réservoir 10 vient d'être rempli partiellement ou complètement. On peut automatiser le contrôle de la solution d'urée 14 lorsque ces deux conditions sont remplies, notamment lorsque conducteur du véhicule vient de remplir le réservoir 10 et qu'il met le contact.

Par exemple, au démarrage, le véhicule est à l'arrêt, le micro-calculateur 30 peut contrôler si le niveau de la jauge de remplissage 44 du réservoir 10 a varié de manière significative par rapport à une valeur enregistrée lorsque le contact a été coupé et dans l'affirmative, lancer le procédé de contrôle de la solution d'urée 14.

Sur les figures 2 et 3, on a représenté un deuxième et un troisième mode de réalisation d'un dispositif de contrôle selon l'invention, dans lesquels les éléments communs aux différents modes de réalisation sont identifiés par les mêmes numéros de référence, bien que disposés différemment les uns par rapport aux autres.

Dans le mode de réalisation de la figure 2, le faisceau F émis par la source lumineuse 24 atteint la face 28 de la pièce 22 où une partie du faisceau est réfractée. Dans la suite, on désigne par «faisceau réfracté», la partie réfractée du faisceau incident. Le faisceau réfracté se propage dans la solution d'urée 14 et atteint une deuxième face 36 de la pièce 22 en contact avec la solution d'urée 14, où il est à nouveau réfracté. Le faisceau doublement réfracté est ensuite détecté par le photodétecteur 26.

Préférentiellement, la source lumineuse 24 est positionnée afin d'émettre un faisceau lumineux formant un angle d'environ 60° avec la normale à la face 28 et le photodétecteur 26 est positionné selon un angle d'environ 70° par rapport à la normale à la face 36. Dans cette configuration, le faisceau détecté par le photodétecteur 26 est nul si les faces 28 et 36 ne sont pas en contact avec la solution d'urée 14.

Si la concentration de la solution d'urée 14 est modifiée, le faisceau est dévié et le photodétecteur 26 détecte un faisceau lumineux dont l'intensité est différente.

Bien que le faisceau émis par la source lumineuse 24 soit réfracté une première fois à l'interface solide-liquide formée par la face 28 de la pièce 22 en contact avec la solution d'urée 14, puis une seconde fois à l'interface liquide-solide formée par la face 36 de la pièce 22 en contact avec la solution d'urée 14, le faisceau réfracté détecté par le photodétecteur 26 est de bonne qualité. En effet, la partie du faisceau réfracté à l'interface entre la pièce 22 et la solution d'urée 14 représente plus de 95% du faisceau émis par la source lumineuse 24 ; il y a donc peu de perte de signal. Bien au contraire, dans ce mode de réalisation, le fait que le faisceau lumineux détecté par le photodétecteur subisse une double réfraction multiplie par deux la sensibilité du dispositif à la variation de concentration de la solution d'urée, ce qui augmente sa précision.

Dans le deuxième mode de réalisation de la figure 2, le dispositif comprend également des moyens de mesure de la température 38, par exemple une sonde de température.

Lors du contrôle de la solution d'urée 14 dans le réservoir 12, le faisceau réfracté est détecté par le photodétecteur 26 qui transforme le signal reçu en un signal électrique, lequel est, par exemple, fourni à un micro-calculateur 30 similaire à celui représenté sur la figure 1. Le micro-calculateur 30 reçoit également un signal émis par la sonde de température 38 et tient compte de cette donnée pour la comparaison entre la grandeur reçue du photodétecteur 26 et la valeur de référence ou la plage de valeurs de référence. On peut donc tenir compte de la variation de température.

On comprend que les moyens de mesure de la température 38 ne sont pas limités à une sonde de température. En outre, les moyens de mesure de la température 38 peuvent également être présents dans le mode de réalisation représenté sur la figure 1.

Dans le troisième mode de réalisation de la figure 3, on a représenté un dispositif similaire à celui de la figure 2, mais qui comporte, en outre, un miroir semi-transparent 40 (schématisé sur cette figure, mais qui est de préférence une lame portant un revêtement et orientée à 45° de sorte que la moitié du faisceau incident passe simplement à travers elle tandis que l'autre moitié est réfléchie) qui sépare le faisceau F émis par la source lumineuse 24 en deux faisceaux de trajectoires différentes. Un premier faisceau lumineux P est propagé dans le matériau de la pièce 22, sans être dévié de sa trajectoire initiale, vers la face 28 où il est réfracté dans la solution d'urée et est détecté par le photodétecteur 26, comme dans le deuxième mode de réalisation. Un deuxième faisceau lumineux témoin T est propagé dans le matériau de la pièce 22 et réfléchi par le miroir vers un deuxième photodétecteur témoin 42.

Le faisceau lumineux témoin T ne se propage que dans le matériau de la pièce 22. Le signal qu'il détecte permet de tenir compte de paramètres d'évolution de la mesure, tels que le vieillissement de la source lumineuse 24 et la température de la solution d'urée 14. La prise en compte de la température par le photodétecteur témoin 42 se justifie par le fait que le dispositif 18 est immergé dans la solution d'urée 14 et qu'il est de volume faible comparé au volume de la solution d'urée 14 dans le réservoir 12. On peut donc faire l'hypothèse que la température du dispositif 18 et celle de la solution d'urée 14 sont les mêmes.

Lorsque l'on désire contrôler la qualité de la solution d'urée 14 dans le réservoir, la comparaison de la grandeur reçue du photodétecteur 26 avec une valeur de référence ou une plage de valeurs de référence tient compte de la grandeur caractérisante du faisceau lumineux détecté par le photodétecteur témoin 42 et transmise au micro-calculateur 30.

Il est bien entendu que l'invention n'est pas limitée aux modes de réalisation précédemment décrits.

Par exemple, le premier mode de réalisation peut comprendre des moyens de mesure de température (38), la comparaison entre la grandeur caractérisante du faisceau lumineux transmis par la face (28) de la pièce (22) avec une valeur de référence ou un ensemble de valeurs de référence définissant une plage de valeurs de référence tenant compte de la température mesurée.

Le dispositif (18) des deuxièmes et troisièmes modes de réalisation peut, comme cela est représenté sur la figure 1, être relié à un micro-calculateur (30) du véhicule automobile (10).

## Revendications

1. Dispositif de contrôle (18) d'une solution d'urée (14) dans un réservoir (12) d'un véhicule automobile (10), **caractérisé en ce qu'**il comprend une source lumineuse (24) apte à émettre un faisceau lumineux, un photodétecteur (26) apte à détecter une partie d'un faisceau lumineux émis par la source lumineuse (24) et une pièce (22) en un matériau permettant la propagation d'un faisceau lumineux émis par la source lumineuse (24), la pièce (22) ayant une face (28, 36) destinée à être en contact avec la solution d'urée (14), la source lumineuse (24), le photodétecteur (26) et la pièce (22) étant agencés de manière qu'un faisceau lumineux émis par la source lumineuse (24) soit propagé par la face (28, 36) de la pièce (22), par réflexion ou par réfraction, vers le photodétecteur (26).

2. Dispositif (18) selon la revendications précédente, comportant des moyens de mesure de température (38).

3. Dispositif selon l'une quelconque des revendications précédentes, dans lequel la pièce (22) est réalisée dans un matériau minéral, par exemple du verre ou du quartz.

4. Dispositif (18) selon l'une quelconque des revendications précédentes, comprenant un miroir semi-transparent (40) apte à séparer un faisceau lumineux émis par la source lumineuse (24) en deux faisceaux de trajectoires différentes, à savoir un premier faisceau lumineux propagé par la face (28, 36) de la pièce vers le photodétecteur (26) et un deuxième faisceau lumineux témoin propagé vers un deuxième photodétecteur témoin (42).

5. Dispositif (18) selon l'une quelconque des revendications précédentes, dans lequel la source lumineuse (24) et le photodétecteur (26) sont intégrés dans la pièce (22).

6. Dispositif (18) selon la revendication précédente, dans lequel la pièce (22) est coudée et dans lequel la source lumineuse (24) et le photodétecteur (26) sont disposés de sorte à réaliser une double réfraction du faisceau lumineux émis par la source lumineuse (24).

7. Réservoir de stockage (12) d'une solution d'urée (14) dans un véhicule automobile (10) **caractérisé en ce qu'**il comprend un dispositif (18) selon l'une quelconque des revendications 1 à 6.

8. Réservoir (12) selon la revendication précédente, dans lequel le dispositif (18) est porté par la paroi inférieure (16) du réservoir (12).

9. Réservoir (12) selon la revendication précédente, dans lequel le dispositif (18) plonge à travers la paroi inférieure (16) du réservoir (12).

10. Procédé de contrôle d'une solution d'urée (14) dans un réservoir (12) d'un véhicule automobile (10), **caractérisé en ce qu'**il comprend les étapes suivantes :
- émission d'un faisceau lumineux dans une pièce (22) en un matériau permettant la propagation dudit faisceau et ayant une face (28, 36) destinée à être en contact avec la solution d'urée (14) et par laquelle ledit faisceau est propagé par réflexion et par réfraction,
- mesure d'une grandeur physique caractérisante d'un faisceau lumineux (réfléchi ou réfracté) propagé par la face (28) de la pièce (22) et comparaison de la grandeur avec une valeur de référence.

11. Procédé de contrôle selon la revendication précédente, dans lequel la grandeur physique est soit l'intensité du faisceau propagé si celui-ci est réfléchi, soit l'angle du faisceau propagé si celui-ci est réfracté.

12. Procédé de contrôle selon la revendication 10 ou 11, comprenant une étape supplémentaire consistant en une mesure de la température de la solution d'urée (14) et dans lequel la comparaison tient compte de la température mesurée.

13. Procédé de contrôle selon l'une quelconque des revendications 10 à 12, comprenant deux étapes supplémentaires consistant en une séparation du faisceau lumineux émis en deux faisceaux de trajectoires différentes, à savoir un premier faisceau lumineux propagé par la face (28, 36) de la pièce (22) et un deuxième faisceau lumineux témoin réfléchi par un miroir, et en une mesure d'une grandeur caractérisante du faisceau lumineux témoin et dans lequel la comparaison tient compte de la grandeur caractérisante du faisceau lumineux témoin.

14. Procédé de contrôle selon l'une quelconque des revendications 10 à 13, comprenant une étape de détection de l'immobilité du véhicule et une étape de détection de remplissage du réservoir (12), le faisceau lumineux étant émis par la source lumineuse (24) quand les deux conditions sont vérifiées.

15. Procédé de contrôle selon l'une quelconque des revendications 10 à 14, dans lequel la pièce (22) est coudée et la source lumineuse et le photodétecteur sont intégrés à cette pièce et disposés de sorte à réaliser une double réfraction.
